# EUROPÄISCHE PATENTSCHRIFT

(11) **EP 1 174 635 B1**
(45) Veröffentlichungstag und Bekanntmachung des Hinweises auf die Patenterteilung: **06.08.2003**
(21) Anmeldenummer: 01114961.4
(22) Anmeldetag: 20.06.2001
(51) Int. Cl.: F16D 65/56

(54) **Nachstellvorrichtung für eine Trommelbremse mit temperatur-abhängiger Schaltvorrichtung**
Drum brake adjuster with a temperature-dependent switch device
Dispositif de réglage pour frein à tambour avec un dispositif de commutation dépendante de la température

(30) Priorität: 19.07.2000 DE 10035456
(43) Veröffentlichungstag der Anmeldung: 23.01.2002
(73) Patentinhaber: Continental Teves AG & Co. oHG, 60488 Frankfurt (DE)
(72) Erfinder: Keferstein, Hans-Georg, 64291 Darmstadt (DE); Ungethüm, Ulrich, 63179 Obertshausen (DE)

(56) Entgegenhaltungen:
- DE-A- 2 644 575
- US-A- 2 740 499
- US-A- 4 809 826

## Beschreibung

Die Erfindung betrifft eine Nachstellvorrichtung für eine Trommelbremse eines Kraftfahrzeuges, mit zumindest zwei Bremsbacken, ferner mit einer an der einen Bremsbacke anliegenden Druckstrebe, und mit einem Stellkeil, welcher zwischen der anderen Bremsbacke und der Druckstrebe zwischengeschaltet ist, wobei zum Zwecke der selbsttätigen Nachstellung der Bremse infolge Reibbelagverschleiß die Druckstrebe von dem Stellkeil abgehoben und der Stellkeil unter Vergrößerung seiner wirksamen Keilfläche gegenüber der Druckstrebe verschoben wird.

Eine gattungsgemäße Nachstellvorrichtung mit ihrer genauan Funktionsweise ist bereits aus der DE 26 44 575 A1 bekannt. Bei einer solchen Nachstellvorrichtung besteht die Gefahr, dass insbesondere bei einer temperaturbedingten großen Wärmeausdehnung eine automatische Nachstellung aufgrund der thermischen Aufweitung der zugehörigen Bremstrommel erfolgt. Dies kann zur Folge haben, dass beim Abkühlen der Bremse, der zugehörigen Bremsbeläge und der Bremstrommel die Bremsbeläge an der Bremstrommel zum Anliegen kommen und schleifen (vergleiche DE-OS 26 44 575 bzw. DE-PS 34 02 530).

Bei selbsttätigen Nachstellvorrichtungen mit Klinken-Sperrrad-Getriebe hat man demzufolge bereits vorgeschlagen, einen Bimetallstreifen einzusetzen, welcher bei Erreichen einer vorbestimmten Temperatur die Klinke außer Eingriff mit dem Sperrrad zu bringen vermag (vergleiche DE-PS 30 19 214). Bei anderen Ausgestaltungen wird so vorgegangen, dass ein die Klinke aufweisender Nachstellhebel zumindest teilweise als Bimetallbauteil ausgebildet ist (vergleiche EP-PS 05 75 825) und somit eine Nachstellung bei sehr hohen Temperaturen unterbindet. Unerwünschterweise ist jedoch bei den vorgenannten Anordnungen die Funktion der thermischen Nachstellungsverhinderung direkt an die eigentliche Nachstellfunktion gekoppelt. Für einige Betriebszustände der Bremse, insbesondere bei sehr hohen Temperaturen, können somit Fehlfunktionen in der Nachstellvorrichtung nicht definitiv ausgeschlossen werden.

Der Erfindung liegt das technische Problem zugrunde, eine eingangs beschriebene Keilnachstellvorrichtung für eine Bremse so weiterzubilden, dass temperaturbedingte Effekte keinen oder einen vernachlässigbaren Einfluss auf eine Nachstellung der Bremse haben.

Gelöst wird diese Aufgabe durch die Merkmalskombination des Patentanspruches 1. Danach umfasst die Nachstellvorrichtung für eine Trommelbremse eines Kraftfahrzeuges zumindest zwei Bremsbacken, eine an einer ersten Bremsbacke anliegende Druckstrebe, und einen Stellkeil, welcher zwischen einer zweiten Bremsbacke und der Druckstrebe zwischengeschaltet ist, wobei zum Zwecke der selbsttätigen Nachstellung der Trommelbremse der Stellkeil unter Vergrößerung seiner für die Nachstellung wirksamen Keilfläche gegenüber der Druckstrebe verschoben wird. Zur Verhinderung einer übermäßigen Nachstellung des Reibbelagverschleißes im Falle einer stark erwärmten Trommelbremse ist ein am Stellkeil anliegendes Sperrelement vorgesehen, das mit einer an der Druckstrebe angeordneten temperaturabhängigen Schaltvorrichtung zusammenwirkt. Mittels des Sperrelementes kann in Abhängigkeit von der Schaltstellung der Schaltvorrichtung eine Stellkeilverschiebung verhindert werden und somit eine unerwünschte rein thermische Nachstellung unterbunden werden. Dabei ist die eigentliche Nachstellfunktion von der Funktion der thermischen Abschaltung entkoppelt.

Vorzugsweise ist das Sperrelement verschiebbar an der Druckstrebe gelagert, wobei das Sperrelement mittels der temperaturabhängigen Schaltvorrichtung an der Druckstrebe verriegelbar ist. Dabei wird eine besonders vorteilhafte Ausführung der Nachstellvorrichtung dadurch erreicht, dass unterhalb einer Auslösetemperatur der temperaturabhängigen Schaltvorrichtung das Sperrelement in einer ersten Schaltstellung der Schaltvorrichtung an der Druckstrebe verriegelt ist, um eine Stellkeilverschiebung zur Nachstellung zuzulassen, und dass oberhalb der Auslösetemperatur der Schaltvorrichtung das Sperrelement in einer zweiten Schaltstellung der Schaltvorrichtung an der Druckstrebe frei verschiebbar ist, um somit eine Stellkeilverschiebung zur Nachstellung zu verhindern. Ein Wechsel in der Schaltstellung der Schaltvorrichtung ist damit unabhängig vom Zustand der Nachstellvorrichtung bzw. Betätigungszustand der Trommelbremse möglich. Somit kann die Nachsteilfunktion z. B. auch bei langen Bremsungen mit stetigem Belagverschleiß (z. B. Bergabfahrten), beim Lösen sowie beim Betätigen der Bremse abgeschaltet werden durch einen entsprechenden Schaltstellungswechsel. Auf bisher bekannte Nachstellvorrichtung trifft dies nicht zu. Die Fehleranfälligkeit einer derartigen, erfindungsgemäßen Anordnung kann durch die genannten Maßnahmen entschieden gesenkt werden.

Eine vorteilhafte Weiterbildung der Nachstellvorrichtung sieht vor, dass die temperaturabhängige Schaltvorrichtung zumindest ein temperaturempfindliches Thermoelement, z. B. aus Bimetall, einer Form-Gedächtnis-Legierung etc. umfasst. Ein derartiges Thermoelement besteht üblicherweise aus einem temperaturempfindlichen Werkstoff und ist infolgedessen in der Lage seine geometrische Anordnung in Abhängigkeit von einer vorgegebenen Auslösetemperatur zu verändern. Diese Eigenschaft wird innerhalb der Schaltvorrichtung zum Wechsel der Schaltstellung genutzt. Dabei ist das Thermoelement insbesondere als Tellerfeder aus Bimetall bzw. als Blechclip aus einem temperaturempfindlichen Werkstoff, z. B. einer Form-Gedächtnis-Legierung, ausgeführt. Ein Bauteil aus einer solchen Form-Gedächtnis-Legierung nimmt zwar bei einer Temperaturänderung eine andere geometrische Form an, kehrt aber nach überwundener Temperaturschwankung zur ursprünglichen Ausgangsform zurück.

Durch diese Maßnahmen der Erfindung wird insgesamt erreicht, dass temperaturbedingte Effekte, insbesondere eine Ausdehnung der Bremstrommel der Trommelbremse, keine Auswirkungen mehr auf die erfindungsgemäße Nachstellvorrichtung haben. Dies ist von besonderer Bedeutung bei Bremsen bzw. Trommelbremsen, welche aus Gewichtsgründen überwiegend aus Leichtmetallen, beispielsweise Aluminium, hergestellt sind. Denn derartige Werkstoffe weisen regelmäßig einen großen Wärmeausdehnungskoeffizienten auf, so dass im Rahmen der Erfindung das gefürchtete temperaturbedingte Nachstellen und schlimmstenfalls Blockieren der Bremse wirksam unterbunden wird. Ein Bremsbelagschleifen nach Abkühlen der (Brems-) Beläge ist ebenso ausgeschlossen wie eine Blockade der gesamten Bremse.

Weitere bevorzugte Erfindungsmerkmale sind den Figuren sowie der zugehörigen Beschreibung zu entnehmen.
Es zeigt:

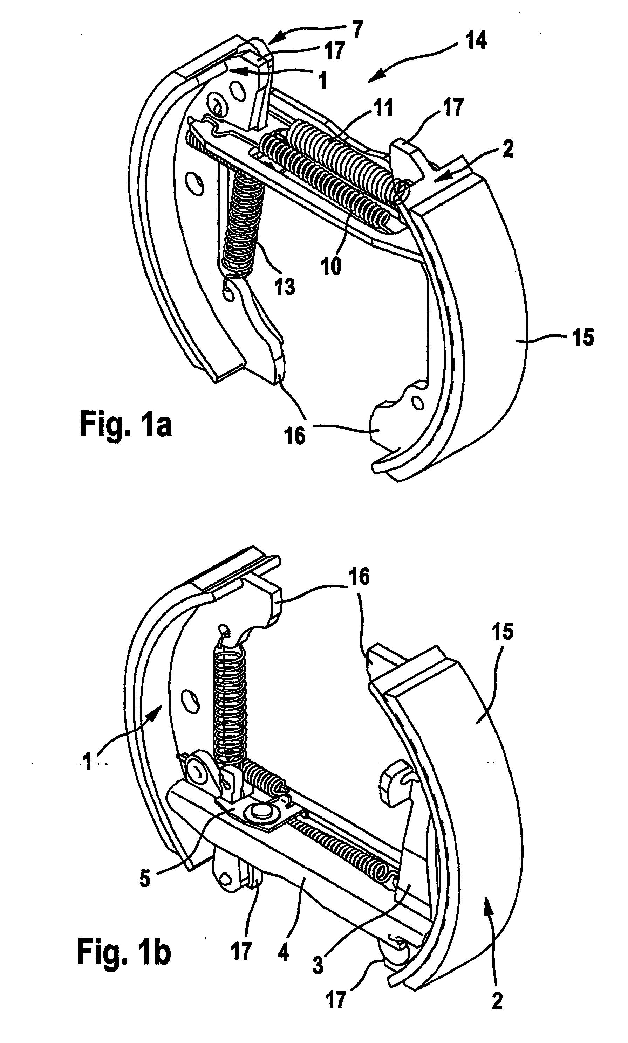

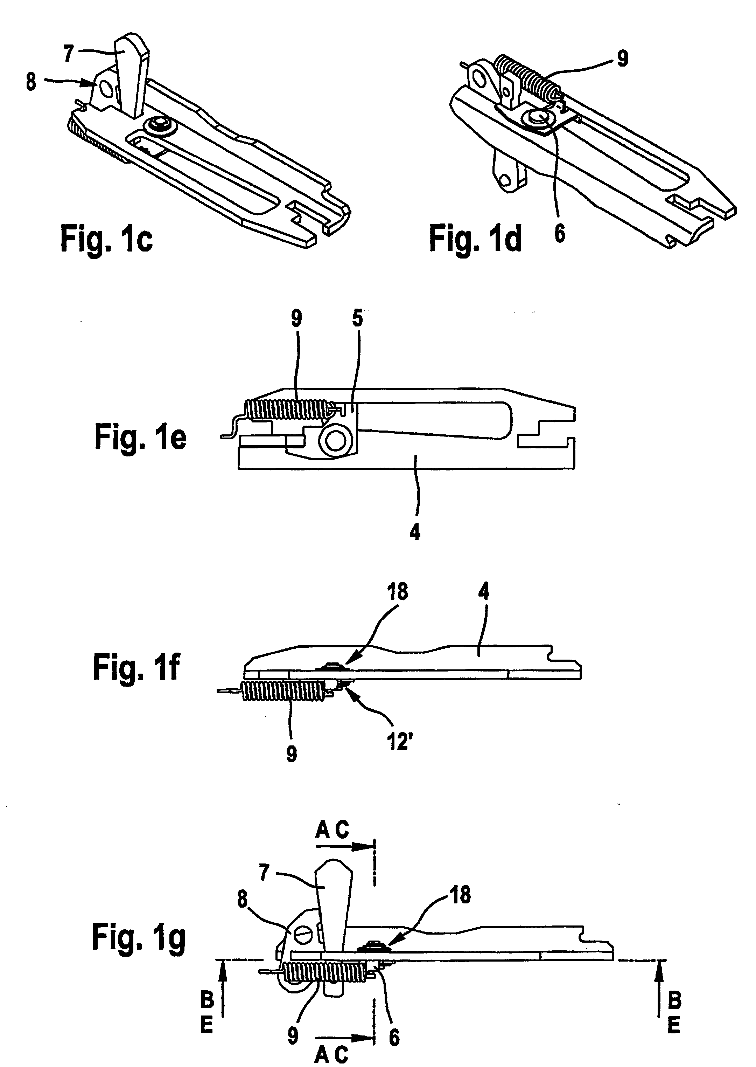

- Fig. 1: eine zwischen zwei Bremsbacken angeordnete, erfindungsgemäße Nachstellvorrichtung mit Druckstrebe sowie Schaltvorrichtung für eine Trommelbremse eines Kraftfahrzeuges, in mehreren Ansichten,
- Fig. 2: mehrere Ansichten der Druckstrebe mit Schaltvorrichtung für unterschiedliche Schaltstellugnen und
- Fig. 3: eine Ausführungsvariante der Schaltvorrichtung nach Figur 2 mit einem anderen Thermoelement.

In den Figuren ist eine zwischen zwei Bremsbacken 1, 2 angeordnete Nachstellvorrichtung 14 für eine Trommelbremse eines Kraftfahrzeuges gezeigt. Die Nachstellvorrichtung 14 ist zusammen mit den Bremsbacken 1, 2 üblicherweise im Innern einer Bremstrommel untergebracht, die allerdings zur Verdeutlichung der erfindungsgemäßen Merkmale in den Figuren nicht gezeigt ist. Auf die grundlegende Anordnung der Nachstellvorrichtung 14 mit den beiden Bremsbacken 1, 2 innerhalb der Bremstrommel bzw. Trommelbremse braucht jedoch an dieser Stelle nicht näher eingegangen zu werden, da sie beispielsweise aus der DE 26 44 575 A1 bekannt ist und auch für in den Figuren gezeigte Ausführung übernommen wurde. Die vorgenannten Bremsbacken 1,2 besitzen in üblicher Weise einen T-förmigen Querschnitt mit einem der nichtgezeigten Bremstrommel zugewandten Flansch, auf dem der jeweilige Reibbelag 15 befestigt ist. Die beiden ersten Enden 16 der beiden Bremsbacken 1,2 stützen sich üblicherweise, d. h. für Trommelbremsen nach Simplex-Bauart, an einem Widerlager bzw. Stützlager ab. Um die beiden Bremsbacken 1,2 gegen die Bremstrommel anzudrücken, ist zwischen zweiten Enden 17 der Bremsbakken 1, 2 eine Betätigungsvorrichtung vorgesehen. Diese ist häufig als hydraulischer Radzylinder ausgebildet und dient der Einleitung der von der Betriebsbremsanlage gelieferten Zuspannkraft im Falle einer Betriebsbremsung.
In gelöstem Zustand der Bremse werden die mittels der Betätigungsvorrichtung an die Bremstrommel angedrückten Bremsbacken 1,2 mit Hilfe wenigstens einer Zugfeder 10, 11 wieder von der Bremstrommel gelöst und aufeinander zubewegt, bis sie an einer Druckstrebe 4 zur Anlage kommen. Diese Druckstrebe 4 benachbart zur Betätigungsvorrichtung angeordnet und erstreckt sich zwischen den beiden Bremsbacken 1,2.

Die Druckstrebe 4 liegt durch die Wirkung der ersten Zugfeder 10 an der zweiten Bremsbacke 2 über einen Bremshebel 3 an. Am anderen Ende der Druckstrebe 4 ist ein Stellkeil 7 zwischen Druckstrebe 4 und der anderen, ersten Bremsbacke 1 angeordnet. Zusätzlich mag an dieser ersten Bremsbacke 1 ein Keillager 8 befestigt sein, welches als Widerlager für den Stellkeil 7 dient, wie es grundsätzlich in der DE-OS 26 44 575 beschrieben ist. Dabei ist das Keillager 8 vorzugsweise als Blechbauteil ausgeführt. Erfindungsgemäß ist zur thermischen Abschaltung der Nachstellvorrichtung 14 bei übermäßiger Erwärmung der Trommelbremse ein am Stellkeil 7 anliegendes Sperrelement 5 vorgesehen, das als zur Druckstrebe 4 verschiebbarer Schlitten ausgeführt ist und über einen Schaltbolzen 6 an der Druckstrebe 4 gelagert ist. Dazu ist der Schaltbolzen 6 in einer Öffnung des Sperrelementes 5 befestigt und gleichzeitig in einem Langloch 19 der Druckstrebe 4 aufgenommen. Das Sperrelement 5 ist wiederum über eine an der ersten Bremsbacke 1 eingehängten Sperr-Zugfeder 9 gegenüber dem Stellkeil 7 vorgespannt. Zur Umsetzung der thermischen Abschaltung der Nachstellvorrichtung 14 ist eine mit dem Sperrelement 5 zusammenwirkende temperaturabhängige Schaltvorrichtung 18 vorgesehen. Mittels der Schaltvorrichtung 18 kann das Sperrelement 5 gegenüber der Druckstrebe 4 durch Bewegung des Schaltbolzens 6 verriegelt werden.

Der vorgenannte Stellkeil 7 erstreckt sich somit mit seinen zugehörigen Keilflächen in eine Öffnung zwischen dem verschiebbar an der Druckstrebe 4 gelagerten Sperrelement 5 und dem Keillager 8 bzw. der ersten Bremsbacke 1. Er weist zwischen seinen Keilflächen einen Keilwinkel auf und ist unter Berücksichtigung der Reibwerte zwischen Stellkeil 7 und Sperrelement 5 bzw. erster Bremsbacke 1 so bemessen, dass Selbsthemmung eintritt, wie dies in der vorgenannten Offenlegungsschrift 26 44 575 im Detail beschrieben ist. Dabei wird der Stellkeil 7 mittels einer Keilfeder 13 gegenüber der ersten Bremsbacke 1 vorgespannt, so dass er bestrebt ist sich in Richtung der Keilfeder 13 zu bewegen.

Ohne Reibbelagverschleiß, d. h. ohne Nachstellung befindet sich der Stellkeil 7 im Gleichgewicht und behält seine Lage bei, so dass er in die Öffnung zwischen Sperrelement 5 und erster Bremsbacke 1 bzw. Keillager 8 nicht weiter eindringen kann. Dies gilt auch für den Fall, dass ein zusätzlich vorgesehener Bremshebel 3 betätigt wird, welcher bei einer nicht näher dargestellte Feststellbremsbetätigung verschwenkt wirkt. Der Bremshebel 3 ist schwenkbar an der zweiten Bremsbacke 2 gelagert und stützt sich außerdem insbesondere bei einer Schwenkbewegung an der Druckstrebe 4 ab und kann somit die Betätigungskraft über die Druckstrebe 4 bzw. den Stellkeil 7 auf die erste Bremsbacke übertragen. Die Bremsbacken werden wie oben beschrieben radial aufgespreizt und in Anlage mit der nicht gezeigten Bremstrommel gebracht.

Die Funktionsweise der Trommelbremse wird im folgenden beschrieben. Bei Betätigung der Betätigungsvorrichtung bzw. des Radbremszylinders werden die Bremsbacken 1,2 gegen die Wirkung der Zugfedern 10, 11 auseinandergedrückt, so dass die Bremsbacken 1,2, jeweils um ihre ersten Enden 16 eine Schwenkbewegung vollführen. Durch das radiale Aufspreizen der beiden Bremsbacken 1,2 werden sie in Reibkontakt mit der Bremstrommel gebracht. Dabei wird keine Nachstellung bzw. eine Stellkeilverschiebung hervorgerufen, solange der Verschiebeweg der Bremsbacken 1, 2 in der Größenordnung des Spiels innerhalb der Nachstellvorrichtung liegt. Für solche Fälle bleibt die Verspannung des Stellkeils 7 mit dem Sperrelement 5 und dem Keillager 8 bzw. der ersten Bremsbacke 1 vom Auseinanderstreben der beiden Bremsbacken 1,2 zunächst unbeeinflusst, da diese Verbindung durch die Federn 10, 11 fest zusammengehalten wird.

Sobald jedoch die Bremsbackenbewegung durch Belagverschleiß und/oder durch eine wärmebedingte Vergrößerung der Bremstrommel größer wird als das vorgegebene konstruktive Bremslüftspiel, so wird die Druckstrebe 4 gegen die Wirkung der Zugfeder 11 vom Stellkeil 7 abgehoben. Dies hat zur Folge, dass die Verspannung zwischen Stellkeil 7, Sperrelement 5 und Keillager 8 bzw. erster Bremsbacke 1 gelöst wird, so dass der Stellkeil 7 unter der Einwirkung der an ihm angreifenden Keilfeder 13 sowie unter Vergrößerung seiner wirksamen Keilfläche verschoben wird. Auf diese Weise findet eine selbsttätige Nachstellung der Trommelbremse statt. Eine Nachstellung durch die vorbeschriebene Verschiebung des Stellkeils 7 tritt also nur dann ein, wenn die Summe aus Verschleiß der Reibbeläge 15 und wärmebedingter Ausdehnung der Bremstrommel größer ist als das konstruktive Bremslüftspiel.

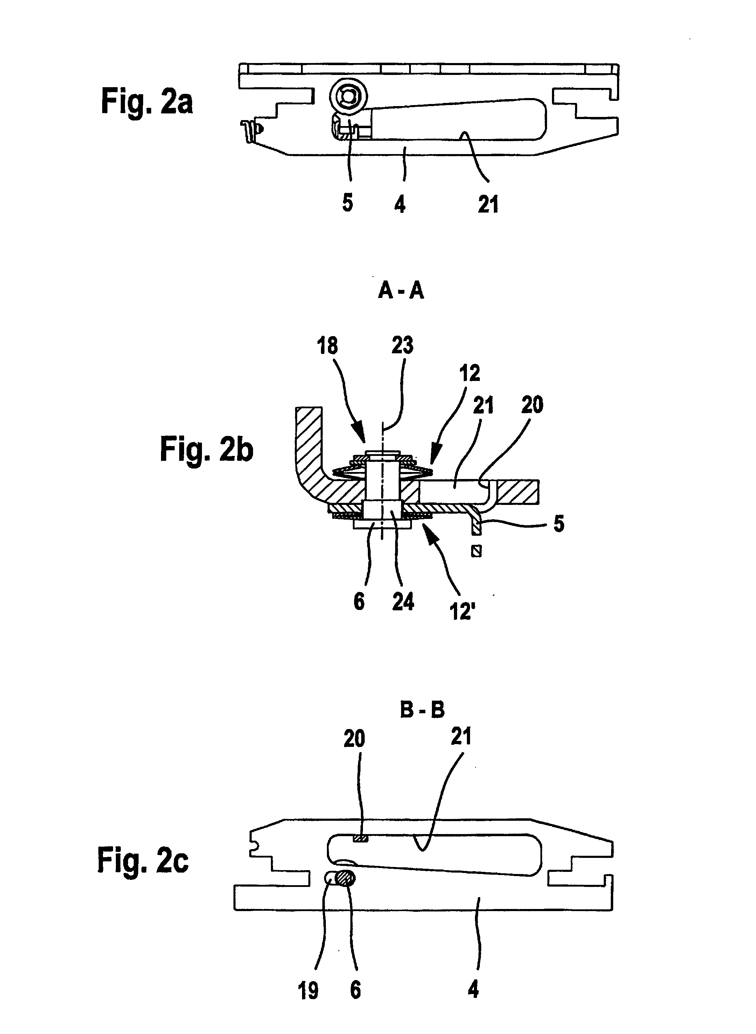

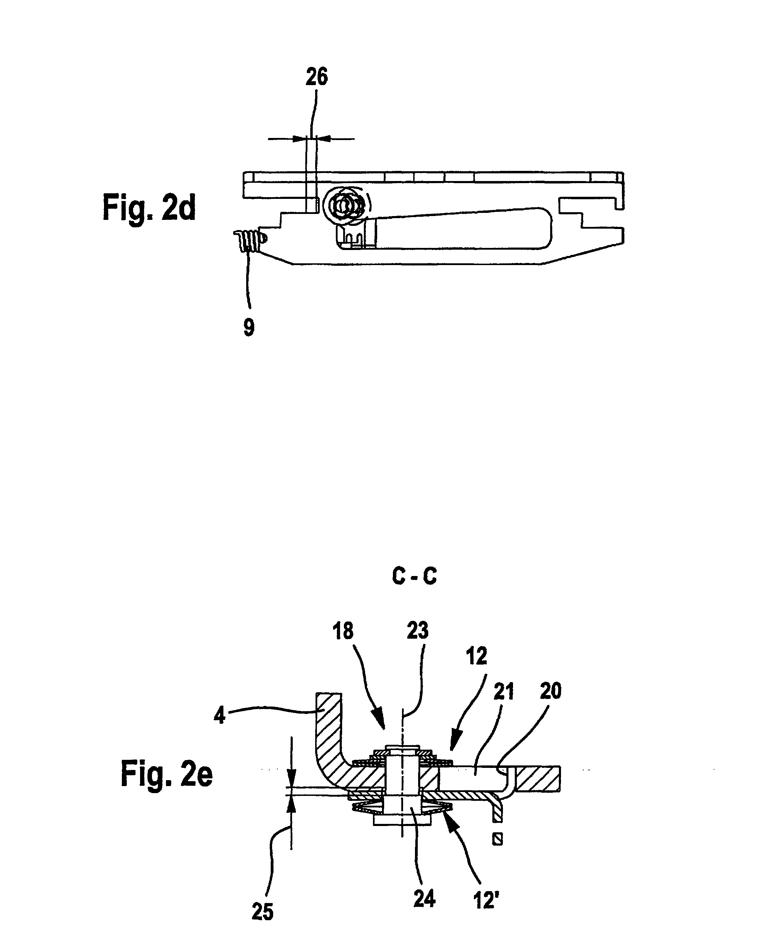

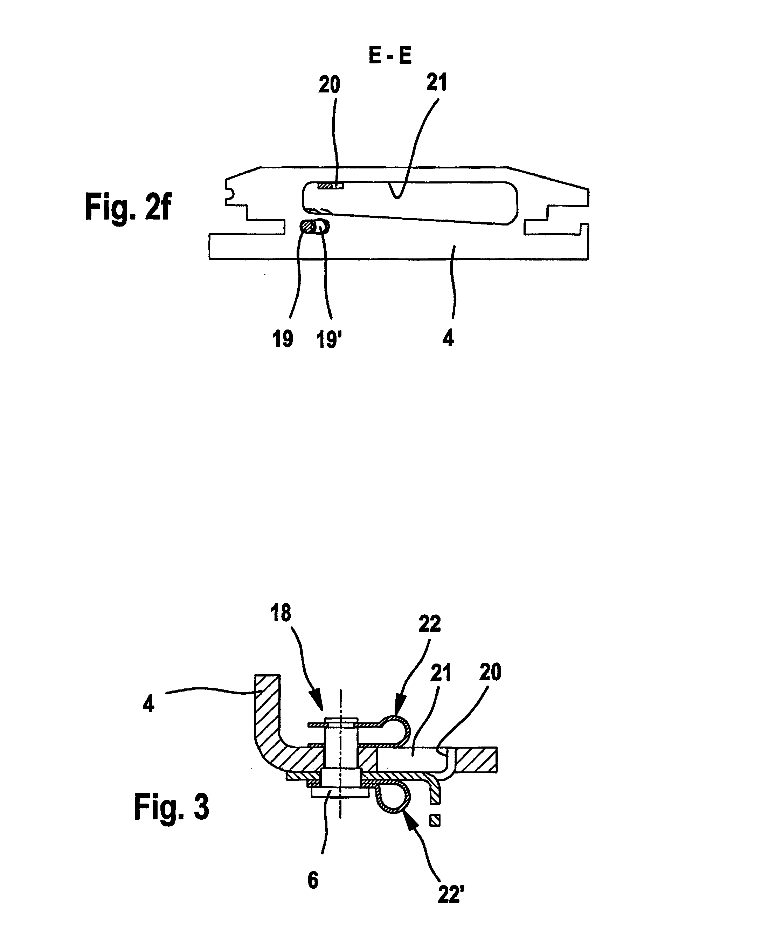

Um eine temperaturbedingte Nachstellung der Bremse zu verhindern, weist nun die Druckstrebe 4 insbesondere ausweislich der Figuren 2 und 3 das Sperrelement 5 mit temperaturabhängiger Schaltvorrichtung 18 auf. Das Sperrelement 5 ist als schlittenförmiges Bauteil verschiebbar an der Druckstrebe 4 gelagert. Dazu ist das Sperrelement 5 über eine Durchgangsöffnung an einem Schaltbolzen 6 befestigt, der in einem Langloch 19 der Druckstrebe 4 verschiebbar aufgenommen ist. Gleichzeitig wird das Sperrelement 5 über eine angeformte Lasche 20 in einer Öffnung 21 der Druckstrebe 4 während der Verschiebung geführt. Die temperaturabhängige Schaltvorrichtung 18 umfasst weiterhin zumindest ein temperaturempfindliches Thermoelement 12, 12', 22, 22', das mit dem Schaltbolzen 6 zusammenwirkt. Vorzugsweise sind jedoch zwei gegenläufig wirkenden Thermoelemente 12, 12', 22, 22' vorgesehen, die auf gegenüberliegenden Seiten der Druckstrebe 4 angeordnet sind und den Schaltbolzen 6 jeweils mit einer in Richtung der Bolzenachse 23 wirkenden Kraft beaufschlagen können. Selbstverständlich ist es ebenso denkbar, daß ein Thermoelement oder eine Paket aus mehreren Thermoelementen gegen die Vorspannung einer entgegengesetzt gerichteten Feder wirksam wird. Das Thermoelement 12, 12', 22, 22' besteht dabei aus einem Bimetall-Werkstoff bzw. aus einem Werkstoff mit ähnlichen temperaturabhängigen Werkstoffeigenschaften, z. B. aus einer Form-Gedächtnis-Legierung. Alle diese Werkstoffe besitzen die Eigenschaft bei Temperaturänderungen ihre geometrische Erscheinungsform zu ändern. Ist die Temperaturschwankung beendet und wieder die Ausgangstemperatur erreicht, so nimmt auch das Bauteil aus einem der genannten Werkstoffe wieder seine ursprüngliche Ausgangsform ein. Diese Werkstoffeigenschaft wird nun zur Umsetzung der thermischen Schaltfunktion genutzt.

Grundsätzlich besitzt die Schaltvorrichtung 18 je nach aktuellem Temperaturzustand zwei Schaltstellungen, die in den Figuren 2a-c und 2d-f dargestellt sind. In der ersten Schaltstellung bei Normaltemperatur nach den Figuren 2a-c wird eine Nachstellung bzw. Stellkeilverschiebung zugelassen, da das Sperrelement 5 gegenüber der Druckstrebe 4 verriegelt ist. Dabei befindet sich der Schaltbolzen 6 in einem Langlochabschnitt 19' mit größerem Durchmesser. In diesen Langlochabschnitt 19' ragt der Schaltbolzen 6 mit einem entsprechenden Schaltbolzenabschnitt 24 mit passendem Durchmesser hinein. Dadurch wird der Schaltbolzen 6 in seiner Position innerhalb des Langloches 19 fixiert. Gleiches gilt für das am Schaltbolzen 6 befestigte Sperrelement 5, das gegenüber der Druckstrebe 4 verriegelt ist. Dabei wird der Schaltbolzen 6 mittels zweier gegenläufig wirksamen Thermoelement 12, 12' in seiner Sperr-Schaltstellung gehalten. Die Thermoelemente 12, 12' sind vorzugsweise als Tellerfedern bzw. Tellerfederpakete aus Bimetall oder einem Werkstoff mit ähnlichen Werkstoffeigenschaften ausgeführt. Bei Normaltemperatur bzw. unterhalb einer vorgegebenen Auslösetemperatur ist ein Tellerfederpaket 12 in gespreizter Position während das andere Tellerfederpaket 12' auf Block liegt. Im verriegelten Zustand nach den Fig. 2a-c wirkt das Sperrelement 5 wie eine fester Bestandteil der Druckstrebe 4, so daß eine Nachstellung bzw. Stellkeilverschiebung zugelassen wird, wenn durch Druckstrebenbewegung infolge Reibbelagverschleiß der Stellkeil 7 freigegeben wird und wie oben beschrieben unter Vergrößerung seiner für die Nachstellung wirksamen Keilfläche nachgeführt werden kann.

Bei starker Erwärmung bzw. Überschreitung einer vorgegebenen Auslösetemperatur der Schaltvorrichtung 18 wird die zweite Schaltstellung gemäß Fig. 2d-f eingenommen. Dabei nehmen die Thermoelemente 12, 12' gegenüber der ersten Schaltstellung ihre jeweils andere Position ein und verschieben den Schaltbolzen 6 in Richtung seiner Bolzenachse 23 um den Schalthub 25. Nach dem Schaltvorgang ist das erste Thermoelement 12 auf Block und das andere Thermoelement 12' entsprechend in gespreizter Position. Der Schaltbolzen 6 gerät mit seinem verdickten Schaltbolzenabschnitt 24 außer Eingriff mit dem zugehörigen Langlochabschnitt 19' und ist damit im Langloch 19 frei verschiebbar. Damit wird auch das Sperrelement 5 freigegeben, so dass es sich um den Sperrhub 26 bewegen kann. In dieser zweiten Schaltstellung wird das Sperrelement 5 durch die Kraft der Sperr-Zugfeder 9 in stetiger Anlage am Stellkeil 7 gehalten. Der Stellkeil 7 befindet sich nunmehr im Gleichgeweicht zwischen der Kraft der Keilfeder 13 und der Kraft des Sperrelementes 5 durch die Sperr-Zugfeder 9.

In diesem Zustand bleibt das Sperrelement 5 unabhängig vom Betätigungszustand der Trommelbremse in Anlage am Stellkeil 7, so dass eine Stellkeilverschiebung und damit eine rein thermisch bedingte Nachstellung unterbleibt.

Figur 3 zeigt eine weitere Ausführung der Schaltvorrichtung 18 in ihrer ersten Schaltstellung mit einer alternativen Variante des Thermoelementes bzw. der Thermoelemente 22, 22'. Die entgegengesetzt wirksamen Thermoelemente 22, 22' sind als Blechclips 22, 22' aus einem Bimetall-Werkstoff oder einem analog wirkenden Werkstoff, z. B. einer Form-Gedächtnis-Legierung, ausgebildet. Allgemein können die Thermoelemente 12, 12', 22, 22' sehr vielfältig gestaltet werden, um sie an die jeweiligen Anforderungen insbesondere hinsichtlich der notwendigen Schaltkräfte anzupassen.

Somit wird durch die temperaturabhängige Schaltvorrichtung 18 eine unerwünschte Nachstellung bei sehr hohen Temperaturen innerhalb der Trommelbremse verhindert. Die erfindungsgemäße Anordnung ermöglicht dabei eine Funktionstrennung zwischen Nachstell- und Sperr-Funktion, so daß der SperrMechanismus für die Nachstellvorrichtung 14 auch während der Betätigung der Trommelbremse wirksam ist.

## Patentansprüche

1. Nachstellvorrichtung für eine Trommelbremse eines Kraftfahrzeuges, mit zumindest zwei Bremsbacken (1,2), mit einer an einer zweiten Bremsbacke (2) anliegenden Druckstrebe (4), und mit einem Stellkeil (7), welcher zwischen einer ersten Bremsbacke (1) und der Druckstrebe (4) angeordnet ist, wobei zum Zwecke der selbsttätigen Nachstellung der Trommelbremse der Stellkeil (7) unter Vergrößerung seiner wirksamen Keilfläche gegenüber der Druckstrebe (4) verschoben wird, **dadurch gekennzeichnet, dass** die Druckstrebe (4) ein am Stellkeil (7) anliegendes Sperrelement (5) zur Vermeidung einer Stellkeilverschiebung aufweist, das mit einer an der Druckstrebe (4) angeordneten temperaturabhängigen Schaltvorrichtung (18) zusammenwirkt.

2. Nachstellvorrichtung nach Anspruch 1, **dadurch gekennzeichnet, dass** das Sperrelement (5) verschiebbar an der Druckstrebe (4) gelagert ist.

3. Nachstellvorrichtung nach einem der vorhergehenden Ansprüche, **dadurch gekennzeichnet, dass** das Sperrelement (5) mittels der temperaturabhängigen Schaltvorrichtung (18) an der Druckstrebe (4) verriegelbar ist.

4. Nachstellvorrichtung nach einem der vorhergehenden Ansprüche, **dadurch gekennzeichnet, dass** unterhalb einer Auslösetemperatur der temperaturabhängigen Schaltvorrichtung (18) das Sperrelement (5) in einer ersten Schaltstellung der Schaltvorrichtung (18) an der Druckstrebe (4) verriegelt ist, um eine Stellkeilverschiebung zur Nachstellung zuzulassen, und dass oberhalb der Auslösetemperatur der Schaltvorrichtung (18) das Sperrelement (5) in einer zweiten Schaltstellung der Schaltvorrichtung (18) an der Druckstrebe frei verschiebbar ist, um somit eine Stellkeilverschiebung zur Nachstellung zu verhindern.

5. Nachstellvorrichtung nach einem der vorhergehenden Ansprüche, **dadurch gekennzeichnet, dass** die Schaltvorrichtung (18) zumindest ein temperaturempfindliches Thermoelement (12, 12', 22, 22'), z. B. aus Bimetall, einer Form-Gedächtnis-Legierung etc. umfasst.

6. Nachstellvorrichtung nach einem der vorhergehenden Ansprüche, **dadurch gekennzeichnet, dass** das Thermoelement als Tellerfeder oder Tellerfederpaket (12, 12') ausgeführt ist.

7. Nachstellvorrichtung nach einem der vorhergehenden Ansprüche, **dadurch gekennzeichnet, dass** das Thermoelement als Blechclip (22, 22') aus einem temperaturempfindlichen Werkstoff ausgeführt ist.

8. Nachstellvorrichtung nach einem der vorhergehenden Ansprüche, **dadurch gekennzeichnet, dass** das Sperrelement (5) mittels wenigstens einer Feder (9) gegenüber der Druckstrebe (4) vorgespannt ist.

## Claims

1. Adjusting device for a drum brake of an automotive vehicle, with at least two brake shoes (1, 2), a strut (4) abutting on a second brake shoe (2), and with an adjusting wedge (7) that is interposed between a first brake shoe (1) and the strut (4), wherein the adjusting wedge (7) by increasing its effective wedge surface, is displaced in relation to the strut (4) for the purpose of the independent adjustment of the drum brake,
**characterized in that** the strut (4) includes a locking element (5) that bears against the adjusting wedge (7) to avoid displacement of the adjusting wedge, said locking element interacting with a temperature-responsive switching device (18) arranged at strut (4).

2. Adjusting device as claimed in claim 1,
**characterized in that** the locking element (5) is displaceably supported on the strut (4).

3. Adjusting device as claimed in any one of the preceding claims,
**characterized in that** the locking element (5) is adapted to be latched at the strut (4) by means of the temperature-responsive switching device (18).

4. Adjusting device as claimed in any one of the preceding claims,
**characterized in that** below a triggering temperature of the temperature-responsive switching device (18), the locking element (5) is locked in a first switch position of the switching device (18) at the strut (4) in order to allow displacement of the adjusting wedge for adjustment purposes, and **in that** above the triggering temperature of the switching device (18) the locking element (5) is freely displaceable at the strut in a second switch position of the switching device to thus prevent displacement of the adjusting wedge for adjustment purposes.

5. Adjusting device as claimed in any one of the preceding claims,
**characterized in that** the switching device (18) comprises at least one temperature-sensitive thermoelement (12, 12', 22, 22'), e.g. made of a bimetal, a shape memory alloy, etc.

6. Adjusting device as claimed in any one of the preceding claims,
**characterized in that** the thermoelement is configured as a cup spring or cup spring assembly (12, 12').

7. Adjusting device as claimed in any one of the preceding claims,
**characterized in that** the thermoelement is configured as a sheet-metal clip (22, 22') made of a temperature-sensitive material.

8. Adjusting device as claimed in any one of the preceding claims,
**characterized in that** the locking element (5) is biased by at least one spring (9) in relation to the strut (4).

## Revendications

1. Dispositif de réglage pour frein à tambour d'un véhicule à moteur, comprenant au moins deux mâchoires de frein (1, 2), une diagonale comprimée (4) s'appliquant sur une seconde mâchoire de frein (2) et une clavette de comprimée réglage (7), qui est aménagée entre une première mâchoire de frein (1) et la diagonale comprimée (4), dispositif dans lequel, aux fins de réglage automatique du frein à tambour, la clavette de réglage (7) est déplacée par rapport à la diagonale comprimée (4) en renforçant sa surface de calage efficace, **caractérisé en ce que** la diagonale comprimée (4) présente un élément bloquant (5) s'appliquant sur la clavette de réglage (7) pour éviter un déplacement de la clavette de réglage, qui coopère avec un dispositif de commutation (18) dépendant de la température agencé sur la diagonale comprimée (4).

2. Dispositif de réglage selon la revendication 1, **caractérisé en ce que** l'élément bloquant (5) est monté sur la diagonale comprimée (4) de manière à pouvoir se déplacer.

3. Dispositif de réglage selon l'une quelconque des revendications précédentes, **caractérisé en ce que** l'élément bloquant (5) peut être verrouillé sur la diagonale comprimée (4) au moyen du dispositif de commutation dépendant de la température (18).

4. Dispositif de réglage selon l'une quelconque des revendications précédentes, **caractérisé en ce que**, en dessous d'une température de déclenchement du dispositif de commutation dépendant de la température (18), l'élément bloquant (5) est verrouillé sur la diagonale comprimée (4) dans une première position de commutation du dispositif de commutation (18) pour permettre un déplacement de la clavette de réglage à des fins de réglage et **en ce que**, au-dessus de la température de déclenchement du dispositif de commutation (18), l'élément bloquant (5) peut se déplacer librement sur la diagonale comprimée dans une deuxième position de commutation du dispositif de commutation (8) pour empêcher ainsi un déplacement de la clavette de réglage aux fins de réglage.

5. Dispositif de réglage selon l'une quelconque des revendications précédentes, **caractérisé en ce que** le dispositif de commutation (18) comprend au moins un thermoélément sensible à la température (12, 12', 22, 22'), par exemple constitué d'un bimétal, d'un alliage à mémoire de forme, etc.

6. Dispositif de réglage selon l'une quelconque des revendications précédentes, **caractérisé en ce que** le thermoélément se présente sous la forme d'un ressort à disques ou d'un paquet de ressorts à disques (12, 12').

7. Dispositif de réglage selon l'une quelconque des revendications précédentes, **caractérisé en ce que** le thermoélément se présente sous la forme d'une agrafe en tôle (22, 22') constituée d'un matériau sensible à la température.

8. Dispositif de réglage selon l'une quelconque des revendications précédentes, **caractérisé en ce que** l'élément bloquant (5) est soumis à une tension préalable au moyen d'au moins un ressort (9) par rapport à la diagonale comprimée (4).
